# EUROPÄISCHE PATENTSCHRIFT

(11) **EP 3 941 795 B1**
(45) Veröffentlichungstag und Bekanntmachung des Hinweises auf die Patenterteilung: **04.12.2024**
(21) Anmeldenummer: 19714571.7
(22) Anmeldetag: 22.03.2019
(51) Int. Cl.: B61D 13/00, B61F 3/04, B61F 5/50, B61F 5/22, B61F 5/30, B61C 9/50, B61F 15/00

(54) **FAHRWERK FÜR EIN SCHIENENFAHRZEUG SOWIE SCHIENENFAHRZEUGWAGEN MIT MINDESTENS EINEM FAHRWERK, SCHIENENFAHRZEUG MIT MINDESTENS EINEM SCHIENENFAHRZEUGWAGEN UND VERFAHREN ZUR HÖHENEINSTELLUNG EINES WAGENKASTENS EINES SCHIENENFAHRZEUGWAGENS**
BOGIE FOR A RAIL VEHICLE AND RAIL VEHICLE CARRIAGE HAVING AT LEAST ONE BOGIE, RAIL VEHICLE HAVING AT LEAST ONE RAIL VEHICLE CARRIAGE, AND METHOD FOR ADJUSTING THE HEIGHT OF A CARRIAGE BODY OF A RAIL VEHICLE CARRIAGE
DISPOSITIF DE ROULEMENT POUR UN VÉHICULE FERROVIAIRE AINSI QUE WAGON FERROVIAIRE MUNI D'AU MOINS UN DISPOSITIF DE ROULEMENT, VÉHICULE FERROVIAIRE MUNI D'AU MOINS UN WAGON FERROVIAIRE ET PROCÉDÉ DE RÉGLAGE EN HAUTEUR D'UNE CAISSE DE WAGON D'UN WAGON FERROVIAIRE

(43) Veröffentlichungstag der Anmeldung: 26.01.2022
(73) Patentinhaber: Stadler Rail AG, 9565 Bussnang (CH)
(72) Erfinder: ROSENKRANZ, Rolf, 8414 Buch am Irchel (CH); CORTESI, Alberto, 8547 Gachnang (CH); SCHILLINGS, Dirk, 8588 Zihlschlacht (CH); MUNOZ, Jesus Juan, 46026 Valencia (ES)
(74) Vertreter: Hepp Wenger Ryffel AG
(86) Internationale Anmeldenummer: PCT/EP2019/057206
(87) Internationale Veröffentlichungsnummer: WO 2020/192860

(56) Entgegenhaltungen:
- EP-A1- 0 465 346
- BE-A- 522 704
- CH-A- 264 180
- DE-A1- 2 616 923
- DE-A1- 3 931 912
- FR-A1- 3 049 252
- GB-A- 2 289 877

## Beschreibung

Die vorliegende Erfindung betrifft ein Fahrwerk für ein Schienenfahrzeug, sowie einen Schienenfahrzeugwagen mit mindestens einem Fahrwerk, ein Schienenfahrzeug mit mindestens einem Schienenfahrzeugwagen und ein Verfahren zur Höheneinstellung eines Wagenkastens.

Fahrwerke von Schienenfahrzeugen lagern eines oder mehrere Radpaare gegenüber dem Wagenkasten. Unter dem Begriff Fahrwerk werden ausdrehende Drehgestelle, bei dem Radpaare in einem gegenüber dem Wagenkasten drehbaren Rahmen gelagert werden und nicht ausdrehende, am Wagenkasten befestigte Fahrwerke zusammengefasst. Besondere Herausforderungen stellen Fahrwerke für Niederflurschienenfahrzeuge dar: wegen der geringen Fussbodenhöhe innerhalb des Wagenkastens darf das Fahrwerk, insbesondere im Bereich zwischen den Rädern, eine gewisse Höhe nicht überschreiten.

Aus EP 0 548 044 ist ein wiegenloses Niederflurdrehgestell mit einem Drehgestellrahmen und zwei Radsätzen bekannt, wobei bei einem angetriebenen Drehgestell die Räder Radnabenmotoren an der Aussenseite umfassen. Der Aufbau des Drehgestells ist komplex, teuer und aufwendig im Unterhalt.

Weiter ist aus US 2 473 714 ein Drehgestell bekannt, bei dem Einzelräder über Schwingen an Torsionsstäben gelagert sind. Aufgrund der Anordnung des Primärfedersystems ist das offenbarte Drehgestell nicht für Niederflurdrehgestelle geeignet. Zudem werden hohe Torsionsmomente in den Drehgestellrahmen eingeleitet.

Aus CH 264 180 ist ein Drehgestell mit Drehstabfederung als Primärfederung und Lagerung der Räder an Schwingen bekannt. Das Drehgestell weist ebenfalls einen komplexen Aufbau auf.

Die DE 26 16 923 offenbart ein Torsionsstabfederungssystem, welches über unterschiedlich lange, frei gleitend gelagerte Hebelarme gelagert ist. Das System ist sehr störanfällig und instabil.

Weiter ist nachteilig am Stand der Technik, dass insbesondere angetriebene Fahrwerke keinen durchgängigen, breiten Niederflurbereich ermöglichen da der verfügbare Bauraum im Bereich des Wagenkastens eingeschränkt ist. Zudem werden bei der direkten Fixierung von Torsionsstäben am Fahrwerksrahmen hohe Kräfte und Momente direkt in den Rahmen eingebracht, so dass der Rahmen entsprechend stabil und damit aufwändig und schwer gestaltet sein muss.

Aufgabe der vorliegenden Erfindung ist es, diese und weitere Nachteile des Standes der Technik zu beheben und insbesondere ein einfach und stabil aufgebautes Fahrwerk zur Verfügung zu stellen, das einen durchgängigen Niederflurbereich und eine grosse Gangbreite insbesondere auch oberhalb eines motorisierten Fahrwerks ermöglicht und flexibel auf verschiedene Spurweiten und Einsatzgebiete angepasst werden kann. Das Fahrwerk soll auch ohne nennenswerte Kosten- und Funktionsnachteile mit weitgehend demselben Grundkonzept auch als Lauffahrwerk einsetzbar sein. Diese Aufgabe wird durch ein Fahrwerk für ein Schienenfahrzeug, sowie ein Schienenfahrzeugwagen mit mindestens einem Fahrwerk, ein Schienenfahrzeug mit mindestens einem Schienenfahrzeugwagen und in Verfahren zur Höheneinstellung eines Wagenkastens eines Schienenfahrzeugwagens nach den unabhängigen Ansprüchen gelöst.

Die Aufgabe wird durch ein Fahrwerk nach Anspruch 1 gelöst.

Ein solches Fahrwerk ermöglicht einen durchgängigen oder im Wesentlichen durchgängigen Niederflurbereich sowie eine breite Gangbreite im Fahrwerksbereich. Weiter ist eine einfache Federung möglich. Die Verbindung der Torsionsstäbe führt zu ausgeglichenen Radlasten auch beim Befahren von Unebenheiten. Dadurch ist die Entgleisungssicherheit grösser und Strukturbelastungen am Fahrwerksrahmen sind geringer.

Die Verbindungselemente sind bevorzugt nicht steif mit dem Fahrwerksrahmen verbunden, insbesondere sind sie kein Teil des Fahrwerksrahmens. So werden die Drehmomente nicht oder nur in geringem Umfang in den Fahrwerksrahmen eingeleitet.

Der Fahrwerksrahmen ist als im Wesentlichen kastenförmiges Bauteil ausgeführt und kann durch Zwischenwände in verschieden Abteile unterteilt sein. Einige oder alle der Abteile können einen Boden aufweisen. Die Abteile können Öffnungen aufweisen.

Unter dem Begriff Achse wird hier eine drehende oder nicht drehende physikalische, in einer Längsrichtung ausgedehnte Vorrichtung zur Befestigung der Räder verstanden. Unter einer geometrischen Achse ist dagegen die ideelle Rotationsachse eines Gegenstandes zu verstehen. Räder können eine mitdrehende Radachse (im Falle einer Einzelradaufhängung nur eine sehr kurze) aufweisen, mit der sie an anderen Bauteilen gelagert sind. Alternativ sind auch stehende (nicht mitdrehende) Radachsen möglich, insbesondere bei Einzelradaufhängungen. Der Begriff Radlager bezeichnet die Lagerung zwischen der Radachse und dem sie aufnehmenden Bauteil, im Fall stehender Achsen ist der Begriff sinngemäss auszulegen und bezeichnet i.d.R. das Lager zwischen drehendem Rad und stehender Achse. Radachsen können mehrteilig ausgeführt sein und tragen ein oder zwei Räder.

Als Radpaar werden zwei Räder mit im Wesentlichen fluchtenden geometrischen Radachsen bezeichnet, also beispielsweise die beiden in Fahrtrichtung vorne oder hinten am Fahrwerk angeordneten Räder.

Die Radaufhängungen können als Radsätze, Portal- oder Einzelradachsen oder als Einzelradaufhängung gestaltet sein. Ein Radsatz ist eine Vorrichtung, bei der die beiden Räder drehfest auf einer gemeinsamen Radachse befestigt sind. Eine Einzelrad- oder Portalachse ist eine Radachse, bei der die Räder auf einer nicht mitdrehenden Struktur gelagert sind. Portalachsen sind im Sinne der Erfindung alle Achsvarianten mit nicht-koaxialer Querverbindung, beispielsweise gekröpft gestaltete Portalachsen. So ist ein tieferliegender Fussboden im Bereich der Achse möglich. Die Radachsen der Räder sind beidseitig in der nicht drehenden Struktur gelagert. Alternativ können die Räder hier auch ohne eigene Radachse direkt auf der nicht drehenden Struktur gelagert sein. Bei einer Einzelradaufhängung verfügt ebenfalls jedes Rad über eine eigene Radachse, welche aber nicht direkt miteinander verbunden sind.

Das Fahrwerk kann mindestens einen Motor als Antrieb des Fahrwerks umfassen. Dadurch kann das Fahrwerk einfach angetrieben werden.

Das Verbindungselement kann aus hochfestem Material wie Vergütungsstahl, z.B. 34CrMo4, gefertigt sein. Ein solches Material weist eine besonders hohe Festigkeit auf. Das Verbindungselement kann geschmiedet sein. So ist eine platzsparende Lösung möglich.

Das Fahrwerk kann für Schmalspur, Normalspur, Breitspur oder Meterspur ausgebildet sein. Das ermöglicht eine breite Anwendung des Fahrwerks, unter Beibehaltung gleicher Bauteile, insbesondere des gleichen Fahrwerksrahmens.

Das Fahrwerk umfasst vier Schwingen. Je eine Schwinge ist über einen Torsionsstab am Fahrwerksrahmen, bevorzugt ausschliesslich über einen Torsionsstab, gelagert. Die Radachse ist über die Radlagerung an den Schwingen gelagert.

Das ermöglicht eine einfache Lagerung der Primärfederung sowie einen einfachen Aufbau eines Niederflurfahrwerks. Vorzugsweise sind die geometrischen Stabachsen der Torsionsstäbe im Wesentlichen parallel zu den Radachsen angeordnet. Dies ermöglicht eine einfache Anordnung der Torsionsstäbe und eine einfache Momentübertragung.

Vorzugsweise sind die Torsionsstäbe beweglich, insbesondere mit einem elastischen Lager, am Fahrwerksrahmen gelagert. Insbesondere sind die Torsionsstäbe so gelagert, dass sie entlang der geometrischen Stabachse um im Wesentlichen +/- 5 mm verschiebbar sind.

So können Querstösse auf die Räder wenigstens teilweise aufgenommen werden, eine gesonderte Federung zwischen Rad und Torsionsstablager ist unnötig.

Die Aufgabe wird weiterhin durch ein Fahrwerk für ein Schienenfahrzeug gelöst, insbesondere ein Fahrwerk wie vorhergehend beschrieben. Das Fahrwerk umfasst einen Fahrwerksrahmen, mindestens eine, bevorzugt zwei, Portalachsen und mindestens ein Dämpfsystem zur Dämpfung von Bewegungen zwischen Fahrwerksrahmen und Radachse. Das Dämpfsystem umfasst mindestens ein Dämpfelement und mindestens ein, bevorzugt zwei, Bewegungsübertragungselemente zur Übertragung einer vertikalen Einfederungsbewegung des Fahrwerkrahmens. Das Bewegungsübertragungselement ist mit einem Ende an einem Bewegungsübertragungspunkt an der Portalachse angeordnet. Das Dämpfelement ist zwischen der Portalachse und dem Fahrwerksrahmen und mit einem Ende an der Portalachse an einem Dämpfverbindungspunkt angeordnet. Das Dämpfelement ist insbesondere so angeordnet, dass die Dämpfrichtung parallel zur Fahrtrichtung ist. Die Portalachse ist in Richtung vom Fahrwerkrahmen weg schwenkbar ausgebildet. Ein Abstand zwischen dem Dämpfverbindungspunkt und der geometrischen Radachse ist grösser als der Abstand zwischen dem Bewegungsübertragungspunkt und der geometrischen Radachse.

Ein solches Dämpfsystem weist eine geringe Bauhöhe auf und erlaubt somit einen einfachen Aufbau eines Niederflurfahrwerks. Durch ein solches Dämpfsystem ist weiter eine einfache, an die Einfederung der Primärfederung anpassbare Vergrösserung des Dämpfhubs möglich: Die Portalachse wird ausgelenkt, so dass der Abstand zwischen Fahrwerksrahmen und Portalachse vergrössert wird. Die Hublänge des Dämpferelements und somit der Federweg vergrössert sich dementsprechend.

Insbesondere umfasst jede Portalachse zwei Seitenteile und einen zwischen den Seitenteilen angeordneten Brückenträger, wobei die Seitenteile und Brückenträger zwischen den Rädern angeordnet sind. Jedes Seitenteil umfasst eine Portalachslagerung. Wenigstens ein Bewegungsübertragungselement ist in einem Bewegungsübertragungsabstand zur geometrischen Achse der Portalachslagerung an einem Seitenteil angeordnet, so dass der Brückenträger bei vertikaler Einfederung des Fahrwerksrahmens um die geometrische Achse der Portalachslagerung drehbar ist.

So ist ein einfach zu wartendes, platzsparendes und günstiges Dämpfsystem mit grossen Hubbewegungen bei kleinem, vertikalem Federweg möglich. Das Dämpfelement weist somit bei Einfederung der Primärfederung um z einen um einen Faktor erhöhten Hub auf. Der Faktor ist abhängig von der gewählten Geometrie. Das Dämpfelement kann am Brückenträger angeordnet sein.

Vorzugsweise umfasst das Fahrwerk mindestens zwei Abstützelemente zur direkten Verbindung mit einem Wagenkasten. Die Abstützelemente umfassen insbesondere Bogenführungen, Drehkranzsegmente, vorzugsweise mit Gleitelementen, und/oder Rollen, insbesondere Zylinder-oder Kegelrollen.

Das ermöglicht einen einfachen Aufbau eines Schienenfahrzeugs mit einer geringen Flurhöhe. Die Abstützelemente können eine Auflageebene zum Kontakt mit einem entsprechenden Segment am Wagenkasten aufweisen. Das ermöglicht eine einfache Verbindung mit dem Wagenkasten.

Die Drehkranzsegmente können mit Lagerungen mit Wälzkörpern, bevorzugt umlaufenden Wälzkörpern, ausgestattet sein. Bogenführungen sind als hochpräzise Führungselemente -ähnlich wie Lagersehr anspruchsvoll hinsichtlich korrekter Auflagebedingungen. Auch geringe Geometrieabweichungen zwischen den Auflageebenen oder auch Radienabweichungen der Segmente führen aufgrund der hohen Steifigkeit der Bauteile bei den im Fahrzeugbaubau auftretenden Toleranzabweichungen zu unzulässigen kardanischen- und/oder Querbelastungen der Führungen. Daher können zwischen Abstützelement und Fahrwerk elastische Elemente ausgebildet sein. Diese sind so gestaltet, dass sie den im Betrieb auftretenden Belastungen (vertikale Auflast, Querlast, etc.) standhalten und bei Winkelabweichungen der Auflageebenen nur geringe kardanische Momente erzeugen. Ähnliches gilt für allfällige Querabweichungen.

In der Ausführungsform der Abstützelemente mit Rollen sind die Rollen vorzugsweise in einer über einer Sekundärfederung angeordneten Struktur im Fahrwerksrahmen gelagert, so dass ein Wagenkasten auf den Rollen abrollen kann.

Dadurch wird eine Beeinträchtigung des Niederflur-Durchgangbereichs durch einen Drehkranz vermieden und die üblicherweise für die Lagerung des Drehkranzes notwendige Quertraverse (Wiege) zwischen Drehkranz und Fahrwerksrahmen entfällt, was den Freiraum für durchgehenden Niederflurbereich schafft und auch beträchtliche Gewichtseinsparungen ermöglicht.

Ein solches Fahrwerk weist eine sehr geringe Bauhöhe auf und führt damit zu einem einfachen Aufbau eines Schienenfahrzeugs und einem einfachen Kraftfluss über die Abstützelemente.

Vorzugsweise umfasst das Fahrwerk eine Sekundärfederung. Diese Sekundärferderung umfasst insbesondere eine Schraubenfeder, eine Luftfeder und/oder eine Gummifeder. Dadurch wird der Fahrkomfort verbessert. Vorzugsweise umfasst das Fahrwerk mindestens zwei, bevorzugt vier, Federelemente zur Wankversteifung, insbesondere Wankfedern. Die Federelemente sind insbesondere bevorzugt zwischen dem Fahrwerksrahmen und den Verbindungselementen angeordnet, so dass der Fahrwerksrahmen zumindest teilweise auf den Verbindungselementen abgestützt ist. Durch die Anordnung der Federelemente kann die Wankversteifung auf einfache Weise über die Primärfederung realisiert werden.

Unter Wanken wird allgemein ein in Bezug auf die Fahrtrichtung seitliches Neigen des Wagenkastens verstanden. Der wankende Wagenkasten stützt über die Sekundärfederung auf dem Fahrwerksrahmen ab. Dadurch neigt sich der Fahrwerksrahmen und die Federelemente fangen die Bewegung des Wagenkastens zumindest teilweise auf.

Vorzugsweise umfassen die Federelemente Elastomere wie Chloropren oder andere Kunststoffe wie Polyurethan. Das erlaubt eine kostengünstige und doch stabile Federung. Die Federelemente können Metalleinlagen umfassen.

Die Federelemente können progressiv sein und/oder einen Abstand für ein Freispiel umfassen. Dadurch wird der Fahrkomfort erhöht, da bei geringer Krafteinwirkung die Federwirkung relativ weich ist und/oder die Federelemente erst nach einer bestimmten Neigung des Fahrwerks einfedert. Bei grosser Belastung ist die Federwirkung trotzdem hart. Die Federelemente sind bevorzugt mittig am Verbindungselement angeordnet. Neigt sich der Wagenkasten auf eine Seite, so werden die Federelemente, die unterhalb des Verbindungselements angeordnet sind, auf der sich neigenden Seite belastet, die auf der sich hebende Seite werden entlastet. Damit wird eine Rückstellkraft erzeugt, die dem Wanken entgegenwirkt.

Bei einer aussermittigen Anordnung der Federelemente (z.B. über den Torsionsstäben statt in Verbindungselementmitte) kann bei Bedarf auch eine Versteifung gegen Nickbewegungen erzielt werden. Nickbewegungen sind Neigebewegungen des Wagenkastens in Fahrtrichtung.

Das Fahrwerk umfasst einen Fahrwerksrahmen, vier Räder mit je einer Radlagerung und vier Schwingen. Zumindest eine Schwinge, bevorzugt zwei, insbesondere bevorzugt vier, Schwingen, verbindet eine Radachse mit einer Antriebsachse. Die Räder umfassen jeweils eine Innen- und eine Aussenseite. Das Fahrwerk umfasst einen Innenbereich zwischen den Innenseiten der Räder und einen Aussenbereich ausserhalb der Innenseite der Räder. Die Schwingen sind jeweils im Aussenbereich des Fahrwerks angeordnet. Jedes Rad ist über eine Radachse in jeweils mindestens einer Radlagerung gelagert. Jeweils mindestens eine Radlagerung ist in oder an der jeweiligen Schwinge angeordnet und zumindest eine Radlagerung ist gleichzeitig das Getriebelager.

Dadurch wird ein einfacher Aufbau eines angetriebenen Fahrwerks ermöglicht, da sich eine üblicherweise nötige, separate Getriebewellenlagerung und auch die üblicherweise notwendige Kupplung zur Aufnahme von Relativbewegungen zwischen Rad und Schwinge erübrigen. Weiter wird ein Schienenfahrzeug mit durchgehendem Niederflurboden ermöglicht. Ein solches Fahrwerk ermöglicht zudem grosse Gangbreiten auch im Fahrwerksbereich.

Die Räder können ausschliesslich über die Schwingen gelagert sein. Das ermöglicht eine einfache und kompakte Bauweise des Fahrwerks.

Eine Radlagerung kann ein oder mehrere Wälzlager umfassen. Das ermöglicht eine einfache Lagerung der Räder.

Eine Schwinge bildet jeweils mindestens einen Teil der Verbindung zwischen einem Rad und dem Fahrwerksrahmen und ist gegenüber dem Rahmen beweglich. Die Radaufhängungen können als Radsätze, Portal- oder Einzelradachsen oder als Einzelradaufhängung gestaltet sein. Ein Radsatz erlaubt es, zwei Räder auf einfache Weise mit einem Motor und einem Getriebe anzutreiben. Einzelradachsen erlauben es, Einzelradantriebe zu verwenden.

Portalachsen ermöglichen eine einfache und kompakte Bauweise des Fahrwerks und ein Schienenfahrzeug mit durchgehendem oder im Wesentlichen durchgehendem Niederflurboden ermöglicht. Ein solches Fahrwerk ermöglicht zudem grosse Gangbreiten auch im Fahrwerksbereich.

Vorzugsweise sind die Räder ausschliesslich über jeweils eine Schwinge und jeweils einen Torsionsstab gelagert und bevorzugt durch Portalachsen verbunden.

Dadurch ist eine einfache und effiziente Lagerung der Räder möglich. Somit erübrigt sich eine gesonderte Federung zwischen der am Torsionsstab befestigten Schwinge und der Radachse. Die Radachse ist demnach direkt in der Schwinge gelagert.

Vorzugsweise umfasst das Fahrwerk mindestens ein, bevorzugt zwei, insbesondere bevorzugt vier, Getriebe. Jedes Getriebe ist an je einer Schwinge angeordnet, bevorzugt in die Schwinge integriert. Das erlaubt einen platzsparenden Aufbau. Das Getriebe kann dazu auf die Schwinge aufgesetzt sein. Ist das Getriebe in die Schwinge integriert, so dient die Schwinge im Wesentlichen auch als Getriebegehäuse. Diese Anordnung ist daher material- und gewichtsparend.

Vorzugsweise umfasst das Fahrwerk Verstellmittel zum Verstellen des Abstandes zwischen Radachse und Fahrwerksrahmen. Durch die Verstellmittel ist bevorzugt die Position der Schwingen relativ zum Fahrwerksrahmen veränderbar, insbesondere vergrösserbar oder verkleinerbar.

Dadurch lässt sich die Wagenkastenhöhe dem Radverschleiss entsprechend einfach verändern. Solche Verstellmittel ermöglichen einen einfachen Ausgleich des Radverschleisses.

Vorzugsweise sind die Schwingen zweiteilig ausgeführt und ein erstes Teil ist gegenüber einem zweiten Teil in seiner Lage veränderbar. Der erste Teil umfasst das mit dem Fahrwerksrahmen verbundene Lager, der zweite Teil das mit dem Rad verbundene Lager. Insbesondere sind die Teile mit Fixier- und/oder Rastelementen versehen.

Das ermöglicht eine einfache Einstellung der Höhe des Wagenkastens über SOK ohne das bisher übliche Einsetzen von Beilagen oder ähnlichen Mitteln.

Die Fixierelemente können Langlöcher und/oder Schrauben umfassen. Die Rastelemente können auswechselbare Formstücke umfassen. Die Rastelemente weisen Befestigungspositionen auf. Durch die Befestigungspositionen sind die Stellungen der Schwingen diskret veränderbar, insbesondere so, dass ein vertikaler Abstand zwischen den Radachsen und dem Fahrwerksrahmen jeweils um 10 mm veränderbar ist. Die Rastelemente können Langlöcher und/oder Schrauben umfassen. Diese Rastelemente sind so ausgebildet, dass die Position der Schwingenachse im Vergleich zur Radachse verstellbar ist.

Alternativ ist durch die Verstellmittel die Position der Torsionsstäbe anpassbar. Insbesondere ist die Winkelposition der Torsionsstäbe relativ zum Fahrwerksrahmen anpassbar. Insbesondere ist die Winkelposition der Torsionsstäbe gegenüber dem Verbindungselement anpassbar. Dadurch ist der Aufbau der Verstellvorrichtung einfach und effektiv.

Insbesondere umfasst mindestens ein Verbindungselement eine Brücke und Verstellmittel. Die Verstellmittel umfassen mindestens zwei Hebel, wobei zur Verstellung der Winkelposition der Torsionsstäbe der Abstützungspunkt der Hebel an der Brücke in vertikaler Richtung verschiebbar ist. Insbesondere ist der Abstützpunkt durch das Drehen mindestens eines mit den Hebeln verbundenen Exzenters verschiebbar.

Das ermöglicht eine einfache Einstellung der Höhe des Wagenkastens.

Die Verstellmittel können daher Exzenter und zwei Hebel umfassen.. An der Brücke können die Exzenter und je ein mit einem Torsionsstab drehfest verbundener Hebel angeordnet sein. Die Torsionsstäbe können in der Brücke drehbar gelagert sein.

Die Verstellvorrichtung dient letztendlich zur einfachen Veränderung der Wagenkastenhöhe über der Schienenoberkante (SOK): Wird der Exzenter gedreht, werden die Hebel bewegt und die Winkellagen der Torsionsstäbe werden zueinander und im Vergleich zum Fahrwerksrahmen verändert. Alle Drehmomente werden durch die Hebel aufgenommen. Dadurch wird die Position der Schwingen geändert und somit die Höhe der Wagenkastenauflage über der SOK.

Vorzugsweise umfasst das Fahrwerk mindestens ein, insbesondere zwei, Versteifungselemente, insbesondere Hohlträger, zur Versteifung gegen eine Drehbewegung der Schwingen. Jede Schwinge umfasst ein Verlängerungselement zur Verlängerung der Schwinge. Die Verlängerungselemente der Schwingen einer Fahrwerksseite sind über jeweils ein Versteifungselement verbunden oder verbindbar, so dass die Drehbewegungen der Schwingen um die geometrischen Radachsen zumindest teilweise abfederbar sind. Insbesondere umfasst die Verbindungen zwischen Versteifungselement und den Schwingen jeweils einen Abstand, so dass die Drehbewegungen der Schwingen um die geometrischen Radachsen erst ab einer vorbestimmten Belastung des Fahrwerks durch das Versteifungselement abfederbar sind.

So wird eine Primärfederung einfach und sicher ausgeführt: Im Falle eines Bruches der Primärfederung wird durch diese Anordnung des Versteifungselements verhindert, dass das durch den Bruch betroffene Rad annähernd lastlos wird und schützt somit bei Kurvenfahrt vor Entgleisung. Unter der Belastung des Fahrwerks werden hier die Kräfte verstanden, die durch die Beladung eines Fahrzeugs auf ein Fahrwerk wirken, so dass die Primärfederung um einen vertikalen Federweg verschoben wird. Bei geringen Belastungen drehen sich die Schwingen geringfügig, es wirkt nur die Primärfederung. Ab einer bestimmten Belastung des Fahrwerks werden die Drehbewegungen der Schwingen so gross, dass der Abstand überwunden wird und das Versteifungselement die Drehbewegungen abfedert.

Das Verlängerungselement kann ein Teil einer Schwinge, insbesondere des Schwingengehäuses oder der Getriebehalterung oder ein an der Schwinge befestigtes Element sein.

Somit kann eine progressive Federung erzielt werden, also bei kleiner Belastung eine weiche Federung und bei grosser Belastung eine harte Federung. Dadurch wird bei schwach beladenem Fahrzeug ein vergleichsweise hoher Komfort durch die weiche Feder erzielt. Bei zu stark beladenem Fahrzeug werden durch harte Federungen unzulässig grosse Federwege verhindert. Alternativ können Gummi-Winkelfedern wie Chevron-Federn oder zusätzliche Federelemente wie Puffer verwendet werden, die ab einem definierten Federweg zum Tragen kommen.

Im Abstand zwischen Versteifungselement und Schwingen können ein oder mehrere federnde Elemente angeordnet sein. Dadurch lässt sich einfach eine gewünschte Federung erreichen.

Das Versteifungselement kann über jeweils ein Auflageelement und/oder ein Stützelement mit einem Verlängerungselement verbunden und/oder verbindbar sein. Insbesondere umfasst das Auflageelement und/oder das Stützelement ein elastomerisches Material, insbesondere Polyurethan.

Dadurch wird auf einfache Weise eine progressive Federung ohne zusätzliche Belastung von Fahrwerksrahmen und der Torsionsstäbe ermöglicht.

Bevorzugt umfassen die Versteifungselemente jeweils mindestens ein Auflageelement zum Auflegen auf einem Verlängerungselement und ein Stützelement zum Stützen eines Verlängerungselements. Insbesondere ab einer vorbestimmten Belastung des Fahrwerks ist mindestens ein Verlängerungselement über das Auflageelement und das Stützelement mit dem Versteifungselement verbunden. Insbesondere ist jedes Versteifungselement so an den Verlängerungselementen angeordnet, dass bei einer Belastung, die kleiner als die vorbestimmte Belastung ist, das Versteifungselement auf den Verlängerungselementen aufliegt und bei einer Belastung, die der vorbestimmten Belastung entspricht oder grösser als diese ist, eine zweite Berührungsstelle zwischen Versteifungselement und jedem Verlängerungselement gibt, so dass die Verlängerungselemente im Versteifungselement verkeilt sind.

Das ermöglicht einen einfachen und platzsparenden Aufbau eines Fahrwerks.

Das Versteifungselement kann als Hohlkörper, insbesondere rohrförmig, bevorzug mit rechteckigem Querschnitt ausgebildet sein. Im Crashfall kann das Versteifungselement zumindest teilweise plastisch deformierbar sein. Zum andern werden dynamisch bedingte Kraftspitzen im Crashfall gemildert und auf das der Streckgrenze des eingesetzten Materials entsprechende Mass limitiert.

Vorzugsweise umfasst das Fahrwerk zumindest einen, bevorzugt zwei, insbesondere bevorzugt vier, Motoren. Der oder die Motoren sind im Innenbereich angeordnet, bevorzugt umfassen der oder die Motoren jeweils eine Antriebswelle, die parallel zur Radachse angeordnet ist.

So kann das Fahrwerk einfach und kompakt aufgebaut werden. Sind die Antriebswellen parallel zu den Radachsen, ist eine einfache Übertragung der Drehmomente möglich. Jeder Motor treibt über ein Getriebe mindestens ein Rad an, wobei jedes Rad an je einer Schwinge gelagert sein kann. Das Getriebe kann dabei als Stirnradgetriebe ausgeführt sein. Stirnradgetriebe weisen eine einfache Bauweise auf, sind robust und haben einen hohen Wirkungsgrad.

Insbesondere sind die Motoren an den Aussenflächen des Fahrwerksrahmens angeordnet und/oder an den Aussenflächen des Fahrwerkrahmens befestigt. Das ermöglicht eine kompakte Gestaltung des Fahrwerks.

Bei fehlendem Bauraum, z.B. einer Ausführungsform eines Schmalspurfahrwerks, kann pro Seitenfläche nur ein Motor angeordnet sein, also insgesamt zwei Motoren pro Fahrwerk.

Schmalspurbahnen sind so einfach herzustellen und weisen trotzdem eine genügende Leistung von angetriebenen Fahrwerken auf.

Jeder Motor ist bevorzugt über mindestens eine Ausgleichskupplung mit der Getriebeeingangswelle verbunden. Das ermöglicht eine einfache Kraftübertragung vom Motor auf das Getriebe. Die Ausgleichskupplung ist insbesondere so ausgebildet, dass ein radialer Achsversatz möglich ist: Bei Verwendung der oben beschriebenen Primärfederung über an der Schwinge angreifende Torsionsstäbe erfolgt bei Einfederung der Primärfederung ein geringer vertikaler und seitlicher Versatz der Motorachse relativ zur Getriebeeingangswelle, welcher durch die erwähnte Ausgleichskupplung, insbesondere eine Bogenzahlkupplung, ermöglicht wird. So wird eine flexible Kraftübertragung ermöglicht. Die Getriebeausgangsachse ist dabei gleichzeitig die Radachse. Das entsprechende Getriebelager dient als Radlagerung. Dadurch wird ein einfacher und platzsparender Aufbau eines angetriebenen Fahrwerks ermöglicht, da weniger Abstützelemente für die Lagerung von Rädern und Getriebe verwendet werden müssen und auch bei angetriebenen Fahrwerken ein Niederflurbereich über dem Innenbereich des Fahrwerks möglich ist.

Die Radachse kann mehrteilig ausgeführt sein, insbesondere einen auf das Rad aufgeschraubten Adapter umfassen.

Vorzugsweise weist jeder Motor, insbesondere das Motorgehäuse, einen Querschnittsdurchmesser von weniger als 200mm auf. Der Querschnittsdurchmesser bezieht sich auf den Durchmesser des gesamten Motors inklusive des Gehäuses. Insbesondere weist jeder Motor eine Leistung zwischen 45 und 60 kW auf. Die Motoren können dabei Drehzahlen von 10-12kU/min aufweisen. Solche Motoren ermöglichen einen Fahrwerksaufbau mit geringer Höhe bei dem die Motoren unter dem Niederflurbereich angeordnet sind und somit einen einfachen Aufbau von Niederflurschienenfahrzeugen.

Vorzugsweise sind je zwei Motoren mit einer Kupplung verbindbar oder verbunden. Insbesondere sind je zwei Motoren mit einer lösbaren oder starren Kupplung, bevorzugt mit einer passiven Kupplung, insbesondere bevorzugt mit einer Fliehkraftkupplung verbindbar oder verbunden.

Hierzu sind jeweils zwei Motoren derartig angeordnet, dass ihre Wellen zwischen den Motoren verbindbar sind und jeweils auf der der Verbindung gegenüberliegenden Seite an jeweils ein Rad über die Schwinge angekoppelt sind. Bevorzugt sind je zwei einem Radpaar zugeordnete Motoren kuppelbar. Dazu sind die Motorachsen der zu kuppelnden Motoren fluchtend.

Eine starre Kupplung der Motoren ermöglicht einen Sinuslauf, führt aber zu hohen Momenten im Antriebsstrang beim Befahren enger Kurven und zu erhöhtem Schlupf der Räder. Die passive Kupplung wirkt bevorzugt derart, dass sie bei geringen Drehzahlen löst und so zwangsfreie Kurvenfahrt ermöglicht. Bei hohen Drehzahlen schliesst die Kupplung und so wird der Geradeauslauf verbessert. Dabei erlaubt die Kupplung aber Durchrutschen bei hohen Momentunterschieden. Als Kupplung kommt daher beispielsweise eine Fliehkraft- basierende Rutschkupplung in Betracht. Die Kupplungen können getrennt als jeweils eigenständige Kupplungen oder als eine Baueinheit realisiert werden.

Die Aufgabe wird weiter durch ein Fahrwerk für ein Schienenfahrzeug nach Anspruch 10 gelöst.

Das Fahrwerk umfasst mindestens eine, bevorzugt zwei Magnetschienenbremsen. Insbesondere ist die Magnetschienenbremse über einen Seilzug an der Schwinge befestigt. Magnetschienenbremsen bei Tramfahrzeugen werden üblicherweise mit vorgespannten Federn ca. 10 mm über der Schienenoberkante (SOK) gehalten. Dieser Abstand ist unter allen Betriebszuständen -also z.B. auch bei Ein- oder Ausfederung des Fahrzeugs- einzuhalten. Zum einen soll damit verhindert werden, dass der Bremsschuh im nicht bremsenden Betrieb auf den Schienen schleift. Zum andern soll der Abstand zur Schiene gering sein: Ist der Abstand des Bremsschuhs zur Schiene zu gross, reicht das erzeugte Magnetfeld für die Überwindung der Federkräfte nicht aus. Dabei muss auch die Kraft der vorgespannten Aufhängefedern überwunden werden.

Standardmässig werden die Bremsschuhe an einem mit den beiden Achslagergehäusen verbundenen Träger befestigt, so dass Ein- und Ausfederwege des Fahrwerksrahmens keinen Einfluss auf den Abstand zwischen Bremsschuh und Schiene haben.

Bei Niederflurfahrwerken ist häufig der notwendige Raum für den Einbau dieser Tragstruktur nicht vorhanden oder es sind Kompromisse für deren Einbau erforderlich.

Vorzugsweise umfasst die Magnetschienenbremse einen Bremsschuh, einen Seilzug und eine Umlenkrolle. Der Seilzug ist an einem Rahmenbefestigungspunkt des Fahrwerksrahmens und an einem Bremsbefestigungspunkt des Bremsschuhs befestigt. Zwischen dem Rahmenbefestigungspunkt und dem Bremsbefestigungspunkt ist der Seilzug über die Umlenkrolle geführt.

Das ermöglicht eine einfache Anpassung des Abstandes der Magnetschienenbremse über der Schiene.

Die Umlenkrolle kann an einer Schwinge in einem horizontalen Abstand c zur geometrischen Schwingenachse befestigt sein. Der horizontale Abstand c kann in Etwa 2/3 des horizontalen Abstandes a zwischen der geometrischen Schwingenachse und der Radachse betragen. Der Seilzug kann einen ersten Seilabschnitt und einen zweiten Seilabschnitt umfassen. Der erste Seilabschnitt kann zwischen dem Bremsbefestigungspunkt und der Umlenkrolle angeordnet sein. Der erste Seilabschnitt kann im Wesentlichen senkrecht angeordnet sein. Der zweite Seilabschnitt kann zwischen der Umlenkrolle und dem Rahmenbefestigungspunkt in einem Winkel α von im Wesentlichen 60° zur Senkrechten angeordnet sein.

Dadurch kann die Befestigung der Magnetschienenbremsen platzsparend und einfach angebracht werden: Bei dieser geeigneten Wahl der Geometrie der Umlenkung, insbesondere der Lage der Umlenkrolle an der Schwinge, des Rahmenbefestigungspunktes und des Bremsbefestigungspunktes kann so die Einfederung der Primärfederung einfach kompensiert und ein gleichbleibender Abstand zwischen Schiene und Magnetschienenbremse einfach eingehalten werden: die Schwinge verändert leicht ihre Stellung, wodurch über den Seilzug die Höhe der Magnetschienenbremse über der Schiene angepasst wird. Bevorzugt wird bei dieser Art von Magnetschienenbremse die Abstände a und c und der Winkel α so gewählt, dass bei einer vertikalen Verschiebung des Rahmenbefestigungspunkts um eine Rahmenverschiebung z sich der senkrechte Abstand zwischen Radachse und Bremsbefestigungspunkt nicht oder nur geringfügig verändert.

Das Fahrwerk kann wenigstens einen Radsatz mit einer Spurweite W umfassen. Jedes Rad umfasst eine Lauffläche an seinem Umfang. Die Räder eines Radsatzes sind insbesondere an einer Normalspurachse angeordnet. Die Räder eines Radsatzes sind jeweils in einem mittleren Befestigungsabstand zueinander angeordnet. Der mittlere Befestigungsabstand beträgt insbesondere zwischen 1200mm und 1600mm , insbesondere im Wesentlichen 1540mm Die Laufflächen der Räder sind so vom Innenbereich weg nach Aussen versetzt, dass die Spurweite um mindestens 20mm, insbesondere um mindestens 42 mm, grösser ist als der mittlere Befestigungsabstand. Die Spurweite beträgt bevorzugt zwischen 1400 mm und 1676 mm so dass das Fahrwerk für eine Breitspurbahn verwendbar ist.

Dadurch wird eine einfache Umrüstung eines Normalspurfahrwerkes auf ein Breitspurfahrwerk nur durch Austausch der Räder ermöglicht. Die Räder weisen eine Radinnenseite, eine Radaussenseite, Spurkränze und Radnaben auf. Ein Rad für ein Schienenfahrzeug umfasst eine Lauffläche und einen Spurkranz sowie zwei Radseiten. Die Radseite, der der Spurkranz am Nächsten ist, ist die Radinnenseite. Die Radseite, der die Lauffläche am Nächsten ist, ist die Radaussenseite. Auf den Radseiten sind die Radstirnflächen und die Radnabenebenen angeordnet.

Die Radnaben sind entlang der geometrischen Radachsen von der Radinnenseite auf die Radaussenseite ausgedehnt. Die Radnabe umfasst somit eine innere Radnabenebene und eine äussere Radnabenebene.

Der Abstand vom Mittelpunkt zwischen der inneren und der äusseren Radnabenebene eines ersten Rades zum Mittelpunkt zwischen der inneren und äusseren Radnabenebene eines zweiten Rades ist der mittlere Befestigungsabstand. Der Abstand zwischen den Spurkränzen der Räder ist die Spurweite W.

Das Rad kann am Umfang einen Radkranz oder einen Radreifen mit einer inneren und einer äusseren Radstirnfläche, eine Radnabe, eine Radachse, eine Radinnenseite und eine Radaussenseite umfassen. Die Radkranz- oder Radreifenbreite beträgt zwischen 110 mm und 150 mm. Die Radnabe ist entlang der geometrischen Radachse ausgedehnt. Die Radnabe umfasst eine äussere Radnabenebene auf der Aussenseite des Rades. Der Radkranz oder der Radreifen ist so von der Radinnenseite weg nach Aussen versetzt, dass das Rad zwischen der äusseren Radstirnfläche und der äusseren Radnabenebene ein Abstand von mindestens 12 mm, insbesondere mindestens 21 mm aufweist.

Ein solches Rad ermöglicht eine einfache Umrüstung eines Fahrwerks von Normalspur auf Breitspur.

Weiter wird ein Verfahren zur Umrüstung eines Fahrwerks von einem Normalspurfahrwerk auf ein Breitspurfahrwerk beschrieben.

In einem ersten Schritt wird ein Normalspurfahrwerk mit Normalspurrädern bereitgestellt. In einem zweiten Schritt werden die Normalspurräder ausgetauscht mit Rädern wie vorhergehend beschrieben.

So kann ein Fahrwerk einfach von einer Normalspur- auf ein Breitspurfahrwerk umgerüstet werden. Alternativ wird in einem ersten Schritt ein Normalspurfahrwerk ohne Räder bereitgestellt und in einem zweiten Schritt Räder wie vorhergehend beschrieben daran montiert.

Dieses Verfahren erlaubt eine einfache Herstellung eines Breitspurfahrwerks.

Weiterhin wird die Aufgabe durch einen Schienenfahrzeugwagen gelöst. Der Schienenfahrzeugwagen umfasst mindestens ein, insbesondere zwei, Fahrwerke wie vorhergehend beschrieben.

Ein solcher Schienenfahrzeugwagen hat einen einfachen Aufbau und weist einen im Wesentlichen durchgehenden Niederflurbereich auf (eventuell mit Ausnahme der Aussparungen für die Räder) womit grosse Gangbreiten im Fahrwerksbereich auch bei ausdrehenden Fahrwerken und bei Meterspuranwendungen realisierbar sind.

Der Wagenkasten des Schienenfahrzeugwagens kann direkt mit Lagerungselementen des Fahrwerks verbunden oder verbindbar sein. Dadurch wird der Abstand zwischen Wagenkasten und Radachsen verkleinert und ein durchgehend niederfluriger Schienenfahrzeugwagen ermöglicht, da keine Wiege nötig ist.

Weiter wird die Aufgabe durch ein Schienenfahrzeug gelöst. Das Schienenfahrzeug umfasst mindestens einen, bevorzugt mindestenszwei Schienenfahrzeugwagen wie vorhergehend beschrieben.

Es kann sich dabei um ein Multigelenk-Schienenfahrzeug handeln, bei dem zwischen Wagen, welche ein nicht ausdrehendes Fahrwerk wie vorhergehend beschrieben aufweisen, Sänften mitgeführt werden, oder um konventionelle Schienenfahrzeuge bestehend aus mindestens einem Wagen mit insbesondere zwei ausdrehenden Fahrwerken wie vorhergehend beschrieben.

Die Aufgabe wird weiterhin durch ein Verfahren zur Höheneinstellung eines Wagenkastens eines Schienenfahrzeugwagens wie vorhergehend beschrieben gelöst. Durch Verstellmittel wird die Position von Schwingen und/oder Teilen von Schwingen verändert, so dass der vertikale Abstand zwischen Radachsen und dem Wagenkasten verändert wird, insbesondere in Schritten von 10mm.

Ein solches Verfahren ermöglicht ein einfaches Anpassen der Wagenkastenhöhe über SOK zum Ausgleich des Radverschleisses.

Weiter wird die Aufgabe durch ein Verfahren zur Höheneinstellung eines Wagenkastens eines Schienenfahrzeugwagens wie vorhergehend beschrieben gelöst. Die Lage der Primärfederung des Fahrwerks wird verändert, insbesondere die Lage von mindestens vier Torsionsstäben, wodurch der Abstand zwischen Radachse und Fahrwerksrahmen verändert wird. Insbesondere wird der Abstand in Schritten von 10mm verändert.

Die Erfindung wird anhand nachfolgender Figuren beispielhaft erklärt. Es zeigt
Figur 1: Ein Fahrwerk in perspektivischer Ansicht
Figur 2: Eine Seitenansicht des Fahrwerks aus Figur 1
Figur 3: Eine Draufsicht auf das Fahrwerk aus Figur 1
Figur 4: Schematische Ansicht eines Verbindungselements mit einer Verstellvorrichtung
Figur 5: Schematische Seitenansicht einer alternativen Verstellvorrichtung
Figur 6: Schematische Seitenansicht einer Befestigung einer Magnetschienenbremse
Figur 7a und 7b: Schematische Ansichten einer Wankversteifung des Fahrwerks
Figur 8: Eine Fahrwerksseite des Fahrwerks in einer Draufsicht
Figur 9a und 9b: Schematische Darstellung jeweils eines Schienenfahrzeugs mit Fahrwerken
Figur 10a und 10b: Teil einer Schnittansicht eines Fahrwerks mit Dämpfsystem und schematische Ansicht eines Dämpfsystems
Figur 11: Teil eines Schnittes durch ein Versteifungselement in Längsrichtung
Figur 12a und 12b: Schnitt durch ein Versteifungselement in Längsrichtung

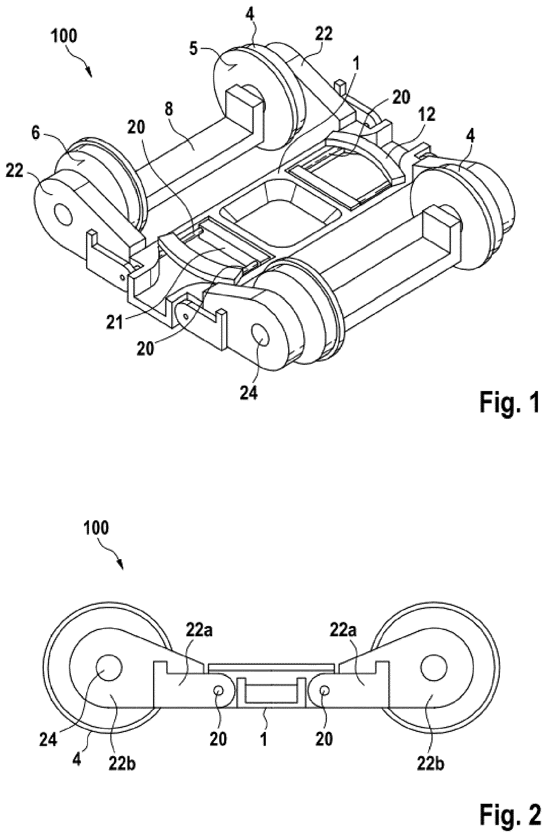

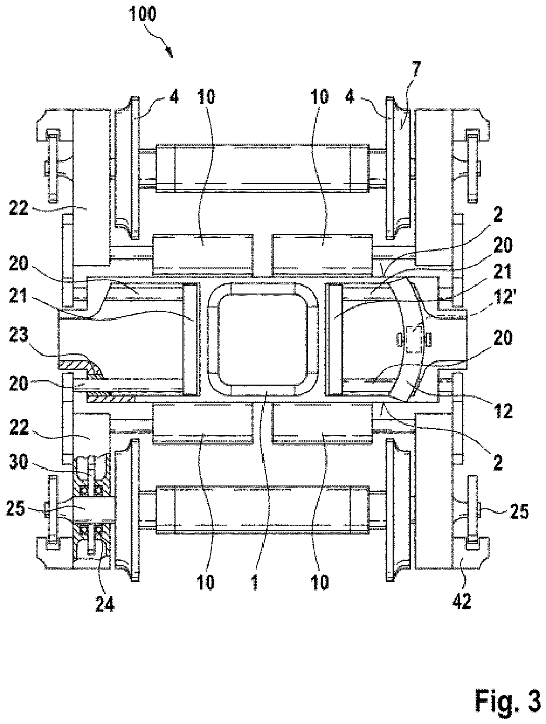

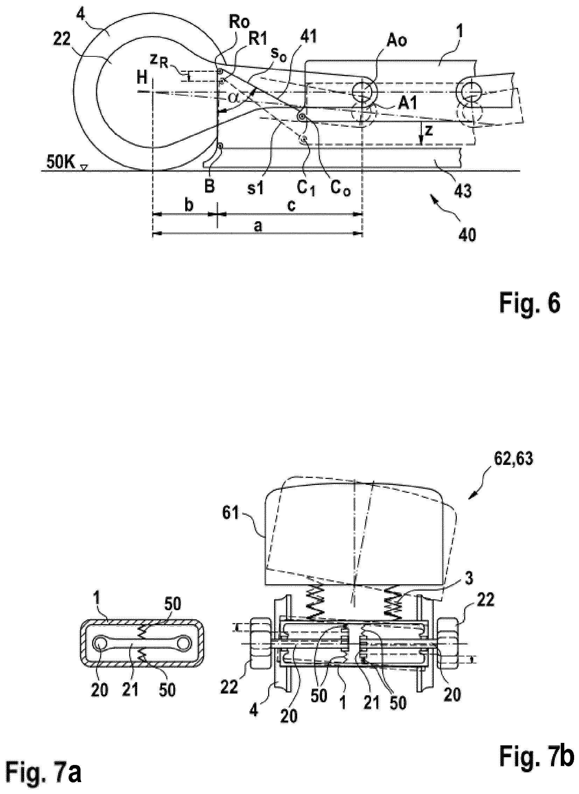

Die Figur 1 zeigt ein Fahrwerk 100 in perspektivischer Ansicht. Das Fahrwerk 100 umfasst einen Fahrwerksrahmen 1 an dem vier Räder 4 über jeweils eine Schwinge 22 und einen Torsionsstab 20 gelagert sind. Die Torsionsstäbe 20 sind somit die Primärfederung des Fahrwerks 100. Die Radachsen 25 sind an Radlagerungen (schematisch angedeutet mit 24) gelagert. Die Radlagerungen 24 sind jeweils in einer Schwinge 22 angeordnet. Zwei Räder sind jeweils über eine Portalachse 8 verbunden. Mit dem Fahrwerksrahmen 1 sind weiter nicht dargestellte Sekundärfederungen, nicht dargestellte Dämpfer und zwei Abstützelemente 12 zur Lagerung eines Wagenkastens 61 (vgl. Figur 7b) verbunden. Weiter umfasst das Fahrwerk 100 vier Bremsen 42 (vgl. Figur 3). Zusätzlich kann das Fahrwerk 100 Magnetschienenbremsen 40 umfassen (vgl. Fig. 6). Das Fahrwerk 100 umfasst in Richtung der Fahrt eine linke und eine rechte Fahrwerksseite. Die Fahrwerksseiten sind im Wesentlichen zu einander spiegelbildlich ausgebildet.

Der Fahrwerksrahmen 1 ist im Wesentlichen kastenförmig ausgebildet und in drei Abteile unterteilt. Der Fahrwerksrahmen 1 kann aus Baustahl oder aus Grauguss gefertigt sein.

Die Räder 4 umfassen eine Innenseite auf der Seite der inneren Radstirnfläche 5, und eine Aussenseite auf der Seite der äusseren Radstirnfläche 6. Zwischen den inneren Radstirnflächen 5 der Räder 4 liegt der Innenbereich des Fahrwerks 100, ausserhalb liegt der Aussenbereich des Fahrwerks 100. Die Schwingen 22 sind im Aussenbereich angeordnet. Pro Rad 4 ist eine Schwinge 22 angeordnet.

Jeweils zwei Torsionsstäbe 20 einer Fahrwerksseite sind über ein Verbindungselement 21 miteinander verbunden, so dass die Drehmomente, die über die Schwingen 22 bei senkrechter Belastung des Fahrwerks 100 auf die Torsionsstäbe 20 einwirken, gegenläufig sind. Dadurch heben sich die Drehmomente zumindest teilweise auf und die Kräfte, die in den Fahrwerksrahmen 1 eingeleitet werden, sind kleiner als bei herkömmlichen Fahrwerken. Die Schwingen 22 und damit die Räder 4 sind nur am Fahrwerksrahmen 1 gelagert, es erfolgt keine bisher übliche weitere Abstützung, z.B. mit Schraubenfedern, gegen den Fahrwerksrahmen 1 oder einem Wagenkasten.

Figur 2 zeigt eine Seitenansicht eines Fahrwerks 100. Die Schwingen 22 sind am Fahrwerksrahmen 1 über die Torsionsstäbe 20 gelagert. Die Radachsen 25 sind über die Radlagerung 24 an den Schwingen 22 gelagert (vgl. Figur 1).

Die Schwingen 22 sind zweiteilig ausgeführt. Jede Schwinge 22 umfasst einen ersten 22a und einen zweiten Teil 22b. Der erste Teil 22a umfasst das rahmenseitige Schwingenlager und der zweite Teil 22b umfasst das radseitige Schwingenlager.

Figur 3 zeigt eine Draufsicht auf das Fahrwerk 100. Die Figur 3 zeigt zudem einen Schnitt durch die Lagerung eines Torsionsstabes 20 und durch einen Teil einer Schwinge 22.

Zu sehen sind die vier Torsionsstäbe 20 und die zwei Verbindungselemente 21 sowie ein als Drehkranzsegment ausgeführtes Lagerungselement 12. Gestrichelt dargestellt ist ein alternatives Lagerungselement 12' in der Ausführung als eine einzelne, im Fahrwerk gelagerte Rolle. Es können auch mehrere Rollen 12' pro Fahrwerksseite vorgesehen sein. Selbstverständlich ist das analoge Lagerungselement auch auf der gegenüberliegenden Fahrwerksseite ausgebildet, allerdings wird es hier nicht dargestellt.

Jeweils zwei Torsionsstäbe 20 sind über ein Verbindungselement 21 so miteinander verbunden, dass die Drehmomente im Verbindungselement 21 gegenläufig sind. So wirken auf den Fahrwerksrahmen 1 hauptsächlich Vertikal-, Quer- und Längskräfte. Momente, welche bei der Einfederung der Torsionsstäbe 20 auftreten, werden nicht oder nur in geringem Umfang in den Fahrwerksrahmen 1 eingeleitet.

Die Torsionsstäbe 20 und das Verbindungselement 21 sind Teil der Primärfederung. In einem Schnitt ist die Lagerung eines Torsionsstabes 20 zu sehen. Der Torsionsstab 20 ist über ein elastisches Lager 23 im Fahrwerksrahmen 1 gelagert. Das elastische Lager 23 erlaubt eine axiale und radiale Verschiebung der Torsionsstäbe 20 von +/- 5mm und erlaubt ebenfalls eine beschränkte Rotation der Torsionsstäbe 20. Die weiteren Torsionsstäbe 20 sind ebenfalls über ein solches elastisches Lager 23 gelagert (hier nicht dargestellt).

Weiter ist in einem Teilschnitt eine Schwinge 22 gezeigt, in der ein Getriebe 30 angeordnet ist. Das Abtriebszahnrad des Getriebes 30 ist auf der Radachse 25 aufgebracht. Jede Radlagerung 24 ist zugleich ein Getriebelager (hier nicht dargestellt). Die Radachse 25 ist somit auch die Getriebeabtriebswelle und über das Radlagerung 24 gelagert.

An jeder Radachse 25 sind zwei Bremsen 42 angeordnet und an der Schwinge 22 angebracht und wirken auf die Radachsen 25.

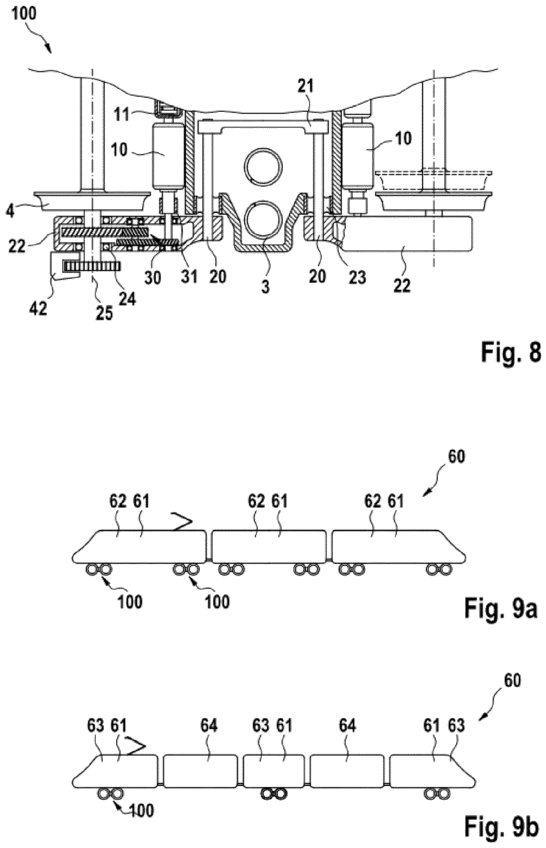

Das Abstützelement 12 ist am Fahrwerksrahmen 1 zwischen den Laufflächen 7 der in Fahrtrichtung hintereinander liegenden Räder 4 angeordnet und kann direkt mit dem Wagenkasten 61 eines Schienenfahrzeugwagens 62; 63 verbunden werden (vgl. Fig. 9a und 9b). Ein Abstützelement 12 umfasst ein teilkreisförmiges, in Richtung des Aussenbereichs gebogenes Führungssegment.

Weiter sind vier Motoren 10 gezeigt, die mit dem Fahrwerksrahmen 1 verbunden sind. Die Motoren 10 sind auf der Innenseite des Fahrwerks 100 angeordnet und an den in und entgegen der Fahrtrichtung weisenden Aussenflächen 2 des Fahrwerksrahmens 1 befestigt. Die geometrischen Motorachsen sind dabei im Wesentlichen parallel zu den Aussenflächen 2. Die Motoren 10 mit Motorgehäuse haben einen Querschnittsdurchmesser von weniger als 200mm und eine Leistung von 50kW, 10-12kU/min bei 80km/h. Die Übersetzung beträgt in etwa 14:1. Die Motoren 10 treiben über jeweils ein Getriebe 30 die Räder 4 des Fahrwerks 100 an.

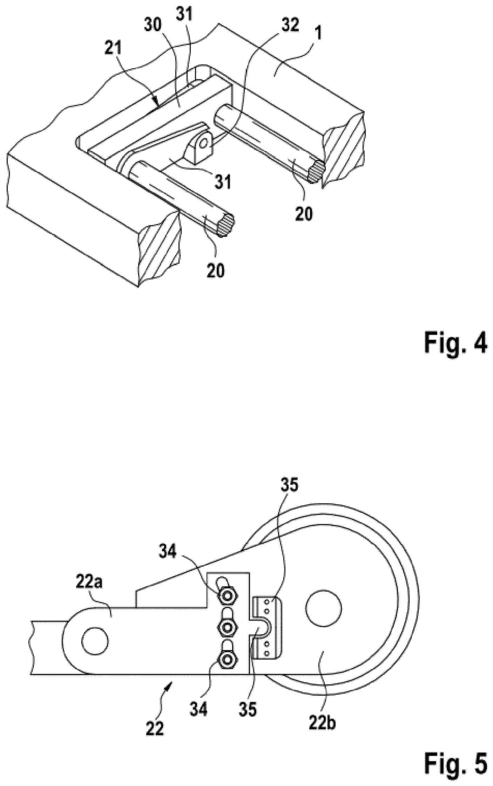

Das Verbindungselement 21 umfasst eine Brücke 30 und eine Verstellvorrichtung. Zu sehen sind ein Teilschnitt des Fahrwerksrahmens 1 und zwei Torsionsstäbe 20, die über die Brücke 30 verbunden sind. An den Torsionsstäben 20 ist die Verstellvorrichtung angeordnet. Die Verstellvorrichtung umfasst Verstellmittel, hier Exzenter 32 und zwei Hebel 31.An der Brücke 30 sind Exzenter 32 und je ein mit einem Torsionsstab drehfest verbundenen Hebel 31 angeordnet. Die Torsionsstäbe 20 sind in der Brücke 30 drehbar gelagert. Die Verstellvorrichtung dient letztendlich zur Veränderung der Wagenkastenhöhe über der Schienenoberkante (SOK): Wird Exzenter 32 gedreht, werden die Hebel 31 bewegt und die Winkellagen der Torsionsstäbe 20 werden zueinander und im Vergleich zum Fahrwerksrahmen 1 verändert. Dadurch wird die Position der Schwingen 22 (vgl. Figur 1) geändert und somit die Höhe der Wagenkastenauflage über der SOK. Die Hebel 31 sind so gestaltet, dass sie die Momente aufnehmen können, die bei der Übertragung entstehen. Insbesondere sind die Hebel 31 daher massiver aufgebaut als dargestellt. Figur 5 zeigt eine schematische Seitenansicht einer alternativen Verstellvorrichtung.

Die Verstellvorrichtung umfasst hier eine Schwinge 22, Stellelemente 34 und Rastelemente 35. Die Schwinge 22 ist in einen fahrwerksrahmenseitigen Rahmenanteil 22a und einen radseitigen Radanteil 22b unterteilt. An der Schwinge 22 sind die Stellelemente 34 und die Rastelemente 35 angeordnet. Die Positionen von Rahmenanteil 22a und Radanteil 22b sind gegeneinander verstellbar und durch die Stellelemente 34 und Rastelemente 35 in verschiedenen Positionen fixierbar. Die Stellelemente 34 umfassen hier Langlöcher und Schrauben. Die Rastelemente 35 sind als Rastnase und am Radanteil 22b angebrachtes Gegenraststück. Das Gegenraststück hat eine festgelegte Rastposition. Die Verstellung kann vorgenommen werden, indem entweder die Stellelemente 34 gelöst und der Rahmenanteil 22a und der Radanteil 22b zu einander verschoben werden und/oder indem ein Gegenraststück mit einer anderen Rastposition eingesetzt wird oder die Position des Gegenraststücks verändert wird.

Figur 6 zeigt eine schematische Seitenansicht einer Magnetschienenbremse 40. Mit ausgezogenen Linien wird die Lage von Rad 4, Schwinge 22 und Fahrwerksrahmen 1 in einem ersten Beladungszustand gezeigt. Die angedeuteten gestrichelten Linien zeigen die Lage der Bauteile in einem zweiten Belastungszustand, in dem der Fahrwerksrahmen 1 um die vertikale Rahmenverschiebung z eingefedert ist.

Die Magnetschienenbremse 40 umfasst einen Bremsschuh 43, einen Seilzug 41 und eine Umlenkrolle Ro. Der Seilzug 41 ist an einem Ende am Bremsbefestigungspunkt B am Bremsschuh 43 und am anderen Ende am Rahmenbefestigungspunkt C am Fahrwerksrahmen 1 befestigt. Die geometrische Radachse H ist von der geometrischen Schwingenachse A in einer horizontalen Schwingenarmlänge a angeordnet. Die Umlenkrolle Ro ist eine horizontale Schwingenarmlänge c von der geometrischen Schwingenachse A entfernt angeordnet. Der Seilzug 41 führt senkrecht in einem ersten Seilabschnitt vom Bremsbefestigungspunkt B zu einer an der Schwinge 22 befestigten Umlenkrolle Ro. In einem zweiten Seilabschnitt führt der Seilzug 41 von der Umlenkrolle Ro in einem Winkel α vom ersten Seilabschnitt weg zum Rahmenbefestigungspunkt C am Fahrwerksrahmen 1. Der zweite Seilabschnitt hat in der nicht eingefederten Position die Ausgangslänge sₒ und in der eingefederten Position die Länge s1.

Im eingefederten Zustand verschiebt sich die Lage der geometrischen Schwingenachse A von der Ausgangsposition Ao zur eingefederten Lage A1:
Unter der vertikalen Einfederung des Fahrwerksrahmens 1, der vertikalen Rahmenverschiebung z, dreht sich die Schwinge 22 um die geometrische Schwingenachse A in der Ausgangsposition Ao in die Ausdrehposition A1. Die Umlenkrolle Ro verschiebt sich an die Position R1, woraus die vertikale Rollenverschiebung z_{R} resultiert. Bei einem horizontalen Abstand c zwischen der Umlenkrolle Ro und der geometrischen Schwingenachse A von c = 2/3 der Schwingenarmlänge a ergibt sich eine vertikale Rollenverschiebung z_{R} ≈ 1/3 z. Der Winkel α des zweiten Seilabschnitts wird nun derart gewählt, dass die durch die vertikale Einfederung bedingte Längenänderung s = s1-sₒ im Seilabschnitt zwischen der Umlenkrolle Ro und Rahmenbefestigungspunkt C gleich gross wird wie die Rollenverschiebung z_{R}. Damit bleibt die Höhenlage des Bremsschuhs 43 (im Bremsbefestigungspunkt B) relativ zur Schienenoberkante auch unter Ein- oder Ausfederung des Fahrzeugs konstant. Mit den dargestellten Abmessungen wird dies bei einer Winkellage des Seilabschnittes zwischen der Umlenkrolle Ro und Rahmenbefestigungspunkt C von α ≈ 60° zur Senkrechten erreicht.

Die Figuren 7a und 7b zeigen schematische Ansichten einer Wankversteifung des Fahrwerks 100: Figur 7a zeigt eine Schnittansicht durch den Fahrwerksrahmen 1 in Fahrtrichtung, Figur 7b zeigt einen Schnitt durch einen Schienenfahrzeugwagen 62; 63 quer zur Fahrtrichtung (vgl. Figuren 9a und 9b). Die durchgezogenen Linien zeigen die Lage der Räder 4, Schwingen 22, Torsionsstäbe 20, des Fahrwerksrahmens 1 und des Wagenkastens 61 in einem ersten Zustand. Die gestrichelten Linien zeigen die Lage dieser Elemente in einer geneigten Position des Wagenkastens 61.

Figur 7a zeigt zwei Torsionsstäbe 20, ein Verbindungselement 21 und zwei Federelemente 50. Die Torsionsstäbe 20 sind über ein Verbindungselement 21 verbunden und über elastische Lager 23 mit dem Fahrwerksrahmen 1 verbunden (vgl. Figur 3). Zwischen dem Fahrwerksrahmen 1 und dem Verbindungselement 21 sind die Federelemente 50 angeordnet. Jeweils ein Federelement 50 ist in einer Fahrposition des Schienenfahrzeugs oberhalb und unterhalb des Verbindungselementes 21 angeordnet und mit dem Fahrwerksrahmen 1 verbunden.

Figur 7b zeigt ein Wagenkasten 61, zwei Räder 4, die Sekundärfederung 3, zwei Torsionsstäbe 20 und vier Federelemente 50.

Der Wagenkasten 61 ist über die Sekundärfederung 3 mit dem Fahrwerksrahmen 1 verbunden. Die Räder 4 sind über Schwingen 22 und Torsionsstäbe 20 am Fahrwerksrahmen 1 gelagert.

Neigt der Wagenkasten 61 zur Seite, d.h. wankt der Wagenkasten 61, so werden die Neigungskräfte über die Sekundärfederung 3 auf den Fahrwerksrahmen 1 übertragen, so dass der Fahrwerksrahmen 1 ebenfalls geneigt wird.

Die Neigungsbewegung wird vom Fahrwerksrahmen 1 auf die Federelemente 50 übertragen, wodurch sie die Neigungsbewegung zumindest teilweise auffangen. Der Fahrwerksrahmen 1 ist daher teilweise über die Federelemente 50 auf den Verbindungselementen 21 abgestützt.

Das infolge Fliehkraft in der Primärfederung wirksame Moment führt zur Einfederung der Schwingen 22 auf der kurvenaussenliegenden Fahrwerksseite (hier rechte Seite in der Figur). Auf der kurveninnenliegenden Seite erfolgt eine entsprechende Ausfederung. Diese Ein- und Ausfederbewegung der Schwingen 22 führt zu einer entsprechenden Wankbewegung des Fahrwerksrahmens 1, da dieser nur an den schwingenseitigen Enden der Torsionsstäbe 20 gelagert ist. Da jeweils ein Torsionsstab 20 fest mit der Schwinge 22 verbunden und die Schwinge 22 direkt auf der Radachse 25 gelagert ist, bilden die Torsionsstäbe 20 und Radachsen 25 eine in Fahrtrichtung gesehen drehfeste Einheit (vgl. Figur 3). Das heisst, die Torsionsstäbe 20 bleiben auch beim Ein- und Ausfedern der Primärfederung stets parallel zu den Radachsen 25, bzw. parallel zur Schienenebene (vgl. Figur 3). Linksseitige und rechtsseitige Torsionsstäbe 20 bleiben demnach parallel zueinander und führen unter Wankeinfluss innerhalb des Fahrwerksrahmens 1 Auf- und Abbewegungen aus (in der Figur gestrichelt dargestellt). Diese konzeptbedingte Eigenschaft wird zur Versteifung der Primärfederung beim Wanken verwendet. Dabei wird die Auf- und Abbewegung mittels Federn 50 zwischen den Torsionsstabenden und dem Fahrwerksrahmen 1 eingeschränkt, bzw. erschwert. Die Federelemente 50 sind dabei zwischen der Mitte des Verbindungselements 21 und der Innenkontur des Fahrwerksrahmens 1 angeordnet. Die Federelemente 50 sind aus Gummi.

Figur 8 zeigt eine Fahrwerksseite eines Fahrwerks 100 in einer Draufsicht und ein Schnitt durch eine Schwinge 22. Bei einem Fahrwerk 100 ist eine spiegelbildliche Anordnung der gezeigten Elemente vorgesehen.

Auf der rechten Seite ist in durchgezogenen Linien ein Rad 4 in Normalspurposition gezeigt. Die Radachsen sind austauschbar. Alternativ zu einer Radachse mit Rädern in Normalspurposition ist hier eine Radachse mit einem Rad 4' in gestrichelten Linien in einer Schmalspurposition gezeigt. Für ein Normalspurfahrwerk sind bei einem Fahrwerk 100 pro Rad 4 ein Motor 10 und ein Getriebe 30 vorgesehen. Die zwei Motoren 10 einer Radachse, deren Motorachsen fluchtend angeordnet sind, sind über eine Kupplung 11 verbunden. Die Kupplung 11 öffnet je nach Drehzahl und Momentbelastung: Bei kleinen Drehzahlen ist die Kupplung 11 offen. Bei hohen Drehzahlen ist die Kupplung 11 geschlossen. Bei grösseren Momentunterschieden zwischen den gekuppelten Teilen kann die Kupplung 11 rutschen.

Die Torsionsstäbe 20 sind über die elastischen Lager 23 im Fahrwerksrahmen 1 gelagert und an ihrem im Innenbereich des Fahrwerkes 100 befindlichen Ende durch das Verbindungselement 21 verbunden. Das Verbindungselement 21 nimmt die Torsionsstäbe 20 drehfest auf. An ihrem anderen Ende sind die Torsionsstäbe drehfest mit den Schwingen 22 verbunden.

Die Schwingen 22 nehmen für angetriebene Räder 4 jeweils das Getriebe 30 auf. Über die Ausgleichskupplung 31 ist das Getriebe 30 mit dem Motor 10 verbunden. Die Kuppelung 31 dient dem Ausgleich des sich bei Einfederung der Schwingen 22 einstellenden Versatz zwischen Motorachse und Getriebeeingangsachse. Die Räder 4 sind an der Radachse 25 angeordnet, die gleichzeitig die Getriebeabtriebswelle ist. Die Schwinge 22 trägt ebenfalls eine Bremse 42. Für ein Fahrwerk 100 ist üblicherweise pro Rad 4 eine Bremse 42 an jeder Schwinge 22 angeordnet (vgl. Figur 3). Die Bremse 42 ist an der Schwinge 22 angeordnet und wirkt direkt auf die Radachse 25. Die Radachse 25 ist mittels Radlagerungen 24 direkt in der Schwinge 22 gelagert und nicht weiter gegenüber dem Fahrwerksrahmen 1 abgestützt.

Weiter ist in der Figur schematisch die Sekundärfederung 3 gezeigt. Die Sekundärfederung 3 ist in Fahrtrichtung gesehen in der Mitte des Fahrwerks 100 angeordnet. Pro Fahrwerksseite sind zwei Sekundärfederelemente 3 angeordnet.

Die Figuren 9a und 9b zeigen jeweils ein Schienenfahrzeug schematisch mit Fahrwerken 100.

Figur 9a zeigt dabei ein Schienenfahrzeug 60 bestehend aus drei Schienenfahrzeugwagen 62 mit je zwei Fahrwerken 100 und je einem Wagenkasten 61. Diese Fahrwerke 100 sind hier als Drehgestelle ausgeführt.

Figur 9b zeigt ein Schienenfahrzeug 60, das drei Schienenfahrzeugwagen 63 mit je einem Fahrwerk 100 und einem Wagenkasten 61 umfasst. Die Fahrwerke 100 sind nicht ausdrehend ausgeführt. Zwischen je zwei Schienenfahrzeugwagen 63 sind die Wagenkästen 64 angeordnet und werden von den Schienenfahrzeugwagen 63 getragen.

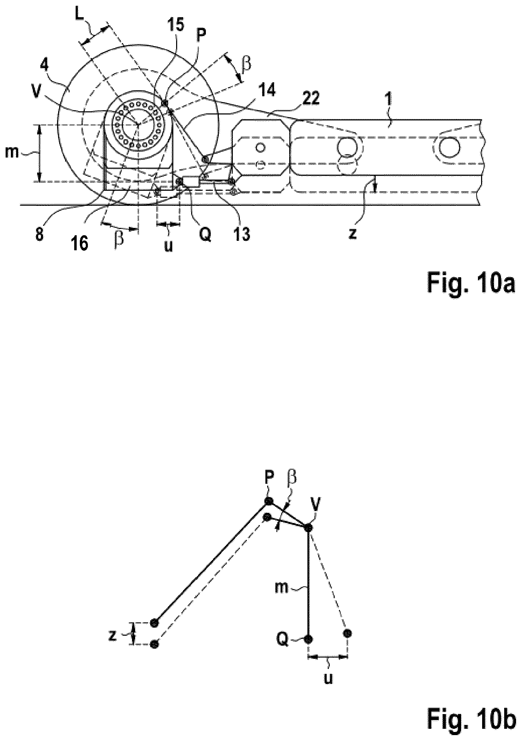

Figuren 10a und 10b zeigen einen Teil einer Seitenansicht eines Fahrwerks mit Dämpfsystem und schematische Ansicht eines Dämpfsystems. Mit durchgezogenen Linien ist die Situation vor der Einfederung dargestellt. Die eingefederte Position ist in gestrichelten Linien dargestellt.

Figur 10a zeigt einen Teil einer Schnittansicht durch ein Fahrwerk 100 in Fahrtrichtung. Zu sehen ist ein Dämpfsystem. Das Dämpfsystem umfasst ein Dämpfelement 13, eine Portalachse 9, ein Fahrwerkrahmen 1 und ein Bewegungsübertragungselement 14.

Die Portalachse 9 weist an einem Ende ein Seitenteil 15 auf, das an der Schwinge 22 um die geometrische Radachse V drehbar gelagert ist. Die Portalachse 9 umfasst zudem einen Brückenträger 16, der mit dem Seitenteil 15 verbunden ist.

Das Dämpfelement 13 ist zwischen Fahrwerksrahmen 1 und Brückenträger 16 angeordnet und weist eine im Wesentlichen waagrechte Dämpfrichtung in Fahrtrichtung auf. Der Hub des Dämpfelements 13 ist durch die Position des Brückenträgers 16 veränderbar.

Ein Ende des Bewegungsübertragungselements 14 ist mit dem Fahrwerkrahmen 1 drehbar verbunden. Das andere Ende des Bewegungsübertragungselements 14 ist drehbar am Bewegungsübertragungspunkt P mit dem Seitenteil 15 verbunden. Der Bewegungsübertragungspunkt P ist in einem Lenkerabstand L zur geometrischen Radachse V angeordnet. Der Dämpfverbindungspunkt Q ist in einem vertikalen Abstand m zur geometrischen Radachse V angeordnet.

Bei Einfederung der Primärfederung verschiebt sich der Fahrwerksrahmen 1 um die vertikale Rahmenverschiebung z. Der Verbindungspunkt des Bewegungsübertragungselements 14 mit dem Fahrwerksrahmen 1 wird durch diese Bewegung verschoben. Das Bewegungsübertragungselement 14 überträgt diese Bewegung wiederum auf das Seitenteil 15, so dass der Bewegungsübertragungspunkt P und damit das Seitenteil 15 und der Brückenträger 16 um die geometrische Radachse V in einem Winkel β geschwenkt werden. Hier gilt tan β ≈ z/L. Die Auslenkung des Brückenträgers 16 am Dämpferverbindungspunkt Q beträgt für kleine z und damit kleine β näherungsweise u ≈ m/L * z. Die Auslenkung der Portalachse 9 ist also bei geeigneter Wahl der Geometrie grösser als die Einfederung.

Figur 10b zeigt eine schematische Darstellung der Verschwenkung der Portalachse 9 (vgl. Figur 10a).

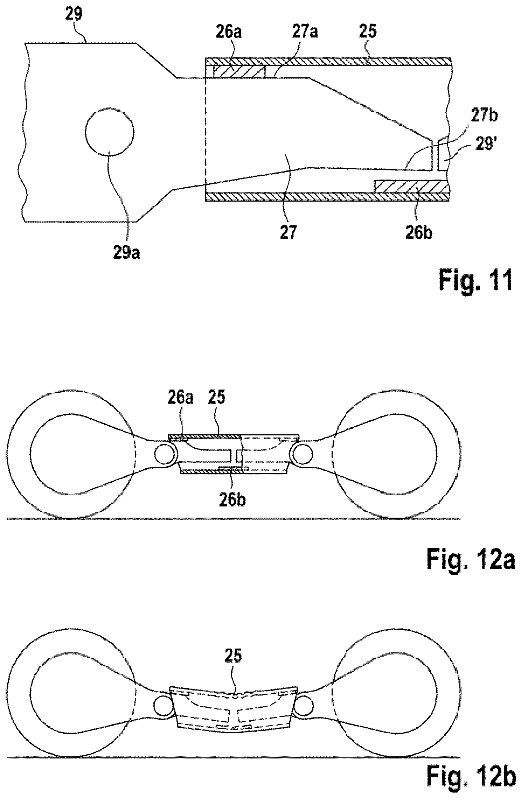

Figur 11 zeigt einen schematischen Schnitt durch einen Teil einer Verbindung einer Schwinge 22 mit einem Versteifungselement 25 in einem ersten Belastungszustand.

Das Versteifungselement 25 ist hier als Hohlträger ausgeführt.

Die Schwinge 22 umfasst ein Verlängerungselement 29, das am Gehäuse der Schwinge 22 befestigt ist.

Das Verlängerungselement 29 umfasst einen Befestigungskörper mit einer Lagerungsstelle 29a und einen Keilkörper 27 mit einer oberen Kontaktstelle 27a. Befestigungskörper und Keilkörper 27 sind integral ausgebildet. Der Keilkörper 27 hat einen Grundriss, welcher im Wesentlichen eine geknickte Keilform umfasst.

Das Versteifungselement 25 weist im Innern ein Auflageelement 26a und ein Stützelement 26b auf. Das Auflageelement 26a ist im Befestigungszustand an der oberen Seite des Versteifungselements 25 und das Stützelement 26b an der unteren Seite angeordnet.

Das Auflageelement 26a und das Stützelement 26b umfassen je ein Kontaktelement aus Polyurethan. Das Auflageelement 26a hat anders als in der Figur dargestellt eine Dicke von im Wesentlichen 2 mm. Das Stützelement 26b hat anders als in der Figur dargestellt eine Dicke, die im Wesentlichen 7-9mm beträgt.

In diesem ersten Belastungszustand liegt das Versteifungselement 25 mit den Auflageelementen 26a auf dem Verlängerungselement 29 auf. Zwischen dem Verlängerungselement 29 und dem Stützelement 26b ist ein Abstand.

Bei Einfederung der Primärfederung gegenüber dem in der Figur dargestellten Zustand dreht sich das Verlängerungselement 29 um die geometrische Achse der Lagerung 29 a. Das Ende des Keilkörpers 27 mit der unteren Kontaktstelle 27b des Verlängerungselements 29 bewegt sich nach unten, bis es auf das Stützelement 26 b trifft. Das Stützelement 26b ist hier für beide Schwingen 22 einer Fahrwerksseite zusammen als Polyurethan-Kontaktelement ausgeführt. Liegt das Verlängerungselement 29 und damit die Schwinge 22 auf dem Stützelement 26b auf, so verkeilt das Verlängerungselement 29 sich im Versteifungselement 25. Somit erfolgt eine Versteifung der Primärfederung.

Die Figuren 12 zeigen jeweils einen Schnitt durch ein Versteifungselement 25 gezeigt in Figur 11 in Längsrichtung. Zu sehen sind die Schwingen 22 einer Fahrwerksseite, die über das Versteifungselement 25 verbunden sind in einem ersten und einem zweiten Belastungszustand.

Figur 12a zeigt den Belastungszustand, der bereits zu Figur 11 beschrieben wurde.

Figur 12b zeigt einen zweiten Belastungszustand. Die Belastung im zweiten Belastungszustand ist grösser, als der erste Belastungszustand.

Die Schwingen 22 sind entsprechend der Belastung aus der Ursprungsposition von Figur 12a gedreht um die geometrische Achse der Lagerungsstelle 29a. Die dargestellte Belastung entspricht der Belastung, die nach Bruch eines Torsionsstabes einer Primärfederung herrscht. Die Verlängerungselemente 29 sind über die Auflageelemente 26a und das Stützelement 26b mit dem Versteifungselement 25 verbunden. Das Versteifungselement 25 ist entsprechend der Drehung der Schwingen 22 elastisch und plastisch verformt worden.

## Patentansprüche

1. Fahrwerk (100), insbesondere ein Niederflurfahrwerk, für ein Schienenfahrzeug, insbesondere für eine Strassenbahn, umfassend mindestens vier Räder (4) mit je einer Radlagerung, mindestens zwei Radachsen zur Aufhängung der Räder (4), einen Fahrwerksrahmen (1) und eine Primärfederung zur Federung der Räder (4) relativ zum Fahrwerksrahmen (1), wobei die Primärfederung mindestens vier Torsionsstäbe (20) aufweist, wobei jeder Torsionsstab (20) entlang einer geometrischen Stabachse ausgedehnt ist, wobei das Fahrwerk (100) vier Schwingen (22) umfasst, wobei je eine Schwinge über jeweils einen Torsionsstab (20) am Fahrwerksrahmen (1), bevorzugt ausschliesslich über einen Torsionsstab (20), gelagert ist, wobei die Radachsen (25) über die Radlagerung (24) an den Schwingen gelagert sind, **dadurch gekennzeichnet, dass** das Fahrwerk (100) mindestens zwei Verbindungselemente (21) umfasst, wobei je zwei Torsionsstäbe (20) einer Fahrwerksseite über ein Verbindungselement (21) so verbunden sind, dass die Drehmomente der Torsionsstäbe (20) gegenläufig sind, insbesondere sich die Drehmomente im Wesentlichen aufheben.

2. Fahrwerk (100) nach Anspruch 1, wobei das Fahrwerk (100) einen Fahrwerksrahmen (1), mindestens eine, bevorzugt zwei, Portalachsen (9) und mindestens ein Dämpfsystem zur Dämpfung von Bewegungen zwischen Fahrwerksrahmen (1) und Radachse (25) umfasst, wobei das Dämpfsystem mindestens ein Dämpfelement (13) und mindestens ein, bevorzugt zwei, Bewegungsübertragungselemente (14) zur Übertragung einer vertikalen Einfederungsbewegung des Fahrwerkrahmens (1) umfasst, wobei das Bewegungsübertragungselement (14) mit einem Ende an einem Bewegungsübertragungspunkt (P) an der Portalachse (9) angeordnet ist, wobei das Dämpfelement (13) zwischen der Portalachse (9) und dem Fahrwerksrahmen (1) und mit einem Ende an der Portalachse (9) an einem Dämpfverbindungspunkt (Q) angeordnet ist, wobei das Dämpfelement (13) insbesondere so angeordnet ist, dass die Dämpfrichtung parallel zur Fahrtrichtung ist, wobei die Portalachse (9) in Richtung vom Fahrwerkrahmen (1) weg schwenkbar ausgebildet ist, wobei ein Abstand zwischen dem Dämpfverbindungspunkt (Q) und der geometrischen Radachse grösser ist als der Abstand zwischen dem Bewegungsübertragungspunkt (P) und der geometrischen Radachse.

3. Fahrwerk (100) nach einem der vorhergehenden Ansprüche, **dadurch gekennzeichnet, dass** das Fahrwerk (100) mindestens zwei Abstützelemente (12) zur direkten Verbindung mit einem Wagenkasten (61) umfasst, wobei die Abstützelemente (12) insbesondere Bogenführungen, Drehkranzsegmente, vorzugsweise mit Gleitelementen, und/oder Rollen, insbesondere Zylinder-oder Kegelrollen, umfassen.

4. Fahrwerk (100) nach einem der vorhergehenden Ansprüche, **dadurch gekennzeichnet, dass** das Fahrwerk(100) mindestens zwei, bevorzugt vier, Federelemente (50) zur Wankversteifung, insbesondere Wankfedern, umfasst, wobei die Federelemente (50) insbesondere bevorzugt zwischen dem Fahrwerksrahmen (1) und den Verbindungselementen (21) angeordnet sind, so dass der Fahrwerksrahmen (1) zumindest teilweise auf den Verbindungselementen (21) abgestützt ist.

5. Fahrwerk (100) nach einem der Ansprüche 1 bis 4, **dadurch gekennzeichnet, dass** das Fahrwerk (100) Verstellmittel zum Verstellen des Abstandes zwischen Radachse und Fahrwerksrahmen (1) umfasst, wobei durch die Verstellmittel bevorzugt die Position der Schwingen (22) relativ zur Fahrwerksrahmen (1) veränderbar, insbesondere vergrösserbar oder verkleinerbar, ist

6. Fahrwerk (100) nach Anspruch 5, **dadurch gekennzeichnet, dass** die Schwingen (22) zweiteilig ausgeführt sind und ein erstes Teil (22a) gegenüber einem zweiten Teil (22b) in seiner Lage veränderbar ist, wobei der erste Teil (22a) das mit dem Fahrwerksrahmen (1) verbundene Lager und der zweite Teil (22b) das mit dem Rad verbundene Lager umfasst und insbesondere die Teile (22a; 22b) mit Fixier- und/oder Rastelementen versehen sind.

7. Fahrwerk (100) nach Anspruch 5, **dadurch gekennzeichnet, dass** durch die Verstellmittel die Position der Torsionsstäbe (20) anpassbar ist, insbesondere die Winkelposition der Torsionsstäbe (20) gegenüber dem Verbindungselement (21).

8. Fahrwerk (100) nach einem der Ansprüche 1 bis 7, **dadurch gekennzeichnet, dass** das Fahrwerk (100) mindestens einen, bevorzugt zwei, insbesondere bevorzugt vier, Motoren (10) umfasst, wobei der oder die Motoren (10) im Innenbereich angeordnet sind und bevorzugt der oder die Motoren (10) jeweils eine Antriebswelle umfassen, die parallel zur Radachse angeordnet ist.

9. Fahrwerk (100) nach Anspruch 8, **dadurch gekennzeichnet, dass** je zwei Motoren (10) mit einer Kupplung, insbesondere mit einer lösbaren oder starren Kupplung, bevorzugt mit einer passiven Kupplung, insbesondere bevorzugt mit einer Fliehkraftkupplung, verbindbar oder verbunden sind.

10. Fahrwerk (100) für ein Schienenfahrzeug, nach einem der Ansprüche 2 bis 9, **dadurch gekennzeichnet, dass** das Fahrwerk (100) mindestens eine, bevorzugt zwei, Magnetschienenbremse (40) umfasst, wobei die Magnetschienenbremse (40) insbesondere über einen Seilzug (41) an der Schwinge (22) befestigt ist.

11. Schienenfahrzeugwagen (63), **dadurch gekennzeichnet, dass** der Schienenfahrzeugwagen (63) einen Wagenkasten (61) und mindestens ein, insbesondere zwei, Fahrwerke (100) nach einem der vorhergehenden Ansprüche umfasst.

12. Schienenfahrzeug, **dadurch gekennzeichnet, dass** das Schienenfahrzeug mindestens einen, bevorzugt mindestens zwei, Schienenfahrzeugwagen (63) nach Anspruch 11 umfasst.

13. Verfahren zur Höheneinstellung eines Wagenkastens (61) eines Schienenfahrzeugwagens (63) nach Anspruch 11, **dadurch gekennzeichnet, dass** durch Verstellmittel die Position von Schwingen (22) und/oder Teilen (22a;22b) von Schwingen (22), gegenüber dem Fahrwerksrahmen (1) verändert wird, so dass der vertikale Abstand zwischen Radachsen und dem Fahrwerksrahmen (1) verändert wird, insbesondere in Schritten von 10mm.

14. Verfahren zur Höheneinstellung eines Wagenkastens (61) eines Schienenfahrzeugwagens (63) nach Anspruch 11, **dadurch gekennzeichnet, dass** die Lage der Primärfederung des Fahrwerks (100), insbesondere von mindestens vier Torsionsstäben (20), verändert wird, wodurch der vertikale Abstand zwischen Radachse und Fahrwerksrahmen (1) verändert wird, insbesondere in Schritten von 10mm.

## Claims

1. Bogie (100), in particular a low-floor bogie, for a railway vehicle, in particular for a tramway, comprising at least four wheels (4) each with a wheel bearing, at least two axles for suspending the wheels (4), a bogie frame (1) and a primary suspension for suspending the wheels (4) relative to the bogie frame (1), wherein the primary suspension comprises at least four torsion bars (20), wherein each torsion bar (20) extends along a geometric bar axle, wherein the bogie (100) comprises four swingarms (22), wherein each swingarm is mounted on the bogie frame (1) via a respective torsion bar (20), preferably exclusively via a torsion bar (20), wherein the axles (25) are mounted on the swingarms via the wheel bearings (24), **characterized in that** the bogie (100) comprises at least two connecting elements (21), wherein two torsion bars (20) of a bogie side are connected via a connecting element (21) in such a way that the torques of the torsion bars (20) are in opposite directions, in particular substantially cancel each other out.

2. Bogie (100) according to claim 1, wherein the bogie (100) comprises a bogie frame (1), at least one, preferably two, portal axles (9) and at least one damping system for damping motions between the bogie frame (1) and the axles (25), wherein the damping system comprises at least one damping element (13) and at least one, preferably two, motion transmission elements (14) for transmitting a vertical compression motion of the bogie frame (1), wherein the motion transmission element (14) is arranged with one end at a motion transmission point (P) on the portal axle (9), wherein the damping element (13) is arranged between the portal axle (9) and the bogie frame (1) and with one end on the portal axle (9) at a damper connection point (Q), wherein the damping element (13) is arranged in particular such that the damping direction is parallel to the direction of travel, wherein the portal axle (9) is designed to be pivotable in the direction away from the bogie frame (1), wherein a distance between the damper connection point (Q) and the geometric wheel axle is greater than the distance between the motion transmission point (P) and the geometric wheel axle.

3. Bogie (100) according to one of the preceding claims, **characterized in that** the bogie (100) comprises at least two support elements (12) for direct connection to a carriage body (61), wherein the support elements (12) comprise in particular curved guides, slewing ring segments, preferably with sliding elements, and/or rollers, in particular cylindrical or tapered rollers.

4. Bogie (100) according to one of the preceding claims, **characterized in that** the bogie (100) comprises at least two, preferably four, suspension elements (50) for roll stiffening, in particular rolling springs, wherein the suspension elements (50) are preferably arranged between the bogie frame (1) and the connecting elements (21), in such a way that the bogie frame (1) is at least partially supported on the connecting elements (21).

5. Bogie (100) according to one of the claims 1 to 4, **characterized in that** the bogie (100) comprises adjusting means for adjusting the distance between the axles and the bogie frame (1), wherein the position of the swingarms (22) relative to the bogie frame (1) can preferably be changed, in particular increased or decreased, by means of the adjusting means.

6. Bogie (100) according to claim 5, **characterized in that** the swingarms (22) are designed in two parts and a first part (22a) can be adjusted in position relative to a second part (22b), wherein the first part (22a) comprises the bearing connected to the bogie frame (1) and the second part (22b) comprises the bearing connected to the wheel and, in particular, the parts (22a; 22b) are provided with fixing and/or locking elements.

7. Bogie (100) according to claim 5, **characterized in that** the adjusting means can be used to adjust the position of the torsion bars (20), in particular the angular position of the torsion bars (20) with respect to the connecting element (21).

8. Bogie (100) according to one of the claims 1 to 7, **characterized in that** the bogie (100) comprises at least one, preferably two, in particular preferably four, motors (10), wherein the motor or motors (10) are arranged in the interior region and preferably the motor or motors (10) each comprise a drive shaft which is arranged parallel to the axle.

9. Bogie (100) according to claim 8, **characterized in that** each two motors (10) are connectable or connected to a clutch, in particular to a releasable or rigid clutch, preferably to a passive clutch, in particular preferably to a centrifugal clutch.

10. Bogie (100) for a railway vehicle, according to one of claims 2 to 9, **characterized in that** the bogie (100) comprises at least one, preferably two, magnetic rail brakes (40), wherein the magnetic rail brake (40) is attached to the swingarms (22) in particular by means of a cable (41).

11. Railway vehicle carriage (63), **characterized in that** the railway vehicle carriage (63) comprises a carriage body (61) and at least one, in particular two, bogie (100) according to one of the preceding claims.

12. Railway vehicle, **characterized in that** the railway vehicle comprises at least one, preferably at least two, railway vehicle carriages (63) according to claim 11.

13. Method for the height adjustment of a carriage body (61) of a railway vehicle carriage (63) according to claim 11, **characterized in that** the position of swingarms (22) and/or parts (22a; 22b) of swingarms (22) is changed with respect to the bogie frame (1), in such a way that the vertical distance between the axles and the bogie frame (1) is changed, in particular in steps of 10 mm.

14. Method for height adjustment of a carriage body (61) of a railway vehicle carriage (63) according to claim 11, **characterized in that** the position of the primary suspension of the bogie (100), in particular of at least four torsion bars (20), is changed, whereby the vertical distance between the axle and the bogie frame (1) is changed, in particular in steps of 10 mm.

## Revendications

1. Châssis (100), en particulier châssis à plancher surbaissé, pour un véhicule ferroviaire, en particulier pour un tramway, comprenant au moins quatre roues (4) avec chacune un palier de roue, au moins deux essieux pour la suspension des roues (4), un cadre de châssis (1) et une suspension primaire pour la suspension des roues (4) par rapport au cadre de châssis (1), la suspension primaire présentant au moins quatre barres de torsion (20), dans lequel chaque barre de torsion (20) s'étend le long d'un axe géométrique de barre, dans lequel le châssis (100) comprend quatre bras oscillants (22), chaque bras oscillants étant montée sur le cadre de châssis (1) par l'intermédiaire d'une barre de torsion (20) respective, de préférence exclusivement par l'intermédiaire d'une barre de torsion (20), dans lequel les essieux (25) sont montés sur les bras oscillants par l'intermédiaire du palier de roue (24), **caractérisé en ce que** le châssis (100) comprend au moins deux éléments de liaison (21), dans lequel deux barres de torsion (20) d'un côté du châssis sont reliées par un élément de liaison (21) de telle sorte que les couples de rotation des barres de torsion (20) sont en direction opposés, en particulier que les couples de rotation s'annulent sensiblement.

2. Châssis (100) selon la revendication 1, dans lequel le châssis (100) comprend un cadre de châssis (1), au moins un, de préférence deux, pont-portiques (9) et au moins un système d'amortissement pour amortir les mouvements entre le cadre de châssis (1) et les essieux (25), dans lequel le système d'amortissement comprend au moins un élément d'amortissement (13) et au moins un, de préférence deux éléments de transmission de mouvement (14) pour transmettre un mouvement de compression vertical du cadre de châssis (1), dans lequel l'élément de transmission de mouvement (14) est disposé avec une extrémité à un point de transmission de mouvement (P) sur le pont-portique (9), dans lequel l'élément d'amortissement (13) est disposé entre le pont-portique (9) et le cadre de châssis (1) et avec une extrémité sur le pont-portique (9) au niveau d'un point de liaison d'amortissement (Q), l'élément d'amortissement (13) étant notamment disposé de telle sorte que la direction d'amortissement est parallèle à la direction de déplacement, dans lequel le pont-portique (9) est réalisé de manière à pouvoir pivoter en s'éloignant du cadre de châssis (1), dans lequel une distance entre le point de liaison d'amortissement (Q) et les essieux géométrique étant plus grande que la distance entre le point de transmission de mouvement (P) et les essieux géométrique.

3. Châssis (100) selon l'une des revendications précédentes, **caractérisé en ce que** le châssis (100) comprend au moins deux éléments d'appui (12) pour la liaison directe avec une carrosserie (61), les éléments d'appui (12) comprenant notamment des guides courbés, des segments de couronne d'orientation, de préférence avec des éléments de glissement, et/ou des galets, notamment des galets cylindriques ou coniques.

4. Châssis (100) selon l'une des revendications précédentes, **caractérisé en ce que** le châssis (100) comprend au moins deux, de préférence quatre, éléments de suspension (50) pour le renforcement du roulis, en particulier des ressorts de roulis, dans lequel les éléments de suspension (50) sont disposés en particulier de préférence entre le cadre de châssis (1) et les éléments de liaison (21), de sorte que le cadre de châssis (1) s'appuie au moins partiellement sur les éléments de liaison (21).

5. Châssis (100) selon l'une des revendications 1 à 4, **caractérisé en ce que** le châssis (100) comprend des moyens de réglage pour régler la distance entre les essieux et le cadre de châssis (1), dans lequel les moyens de réglage permettent de préférence de modifier la position des bras oscillants (22) par rapport au cadre de châssis (1), notamment de l'augmenter ou de la diminuer.

6. Châssis (100) selon la revendication 5, **caractérisé en ce que** les bras oscillants (22) sont réalisées en deux parties et qu'une première partie (22a) peut être ajustée dans sa position par rapport à une deuxième partie (22b), la première partie (22a) comprenant le palier relié au cadre de châssis (1) et la deuxième partie (22b) comprenant le palier relié à la roue, et en particulier les parties (22a; 22b) étant pourvues d'éléments de fixation et/ou de verouillage.

7. Châssis (100) selon la revendication 5, **caractérisé en ce que** les moyens de réglage permettent d'ajuster la position des barres de torsion (20), notamment la position angulaire des barres de torsion (20) par rapport à l'élément de liaison (21).

8. Châssis (100) selon l'une des revendications 1 à 7, **caractérisé en ce que** le châssis (100) comprend au moins un, de préférence deux, en particulier de préférence quatre, moteurs (10), le ou les moteurs (10) étant disposés dans la zone intérieure et, de préférence, le ou les moteurs (10) comprenant chacun un arbre d'entrainement qui est disposé parallèlement aux essieux.

9. Châssis (100) selon la revendication 8, **caractérisé en ce que** chaque fois deux moteurs (10) peuvent être reliés ou sont reliés à un embrayage, en particulier à un embrayage amovible ou rigide, de préférence à un embrayage passif, en particulier de préférence à un embrayage centrifuge.

10. Châssis (100) pour véhicule ferroviaire, selon l'une des revendications 2 à 9, **caractérisé en ce que** le châssis (100) comprend au moins un, de préférence deux, frein magnétique sur rail (40), dans lequel le frein magnétique sur rail (40) est fixé aux bras oscillants (22) notamment par l'intermédiaire d'un câble (41).

11. Wagon de véhicule ferroviaire (63), **caractérisé en ce que** le wagon de véhicule ferroviaire (63) comprend une carrosserie (61) et au moins un, notamment deux, châssis (100) selon l'une des revendications précédentes.

12. Véhicule ferroviaire, **caractérisé en ce que** le véhicule ferroviaire comprend au moins un, de préférence au moins deux, wagons de véhicule ferroviaire (63) selon la revendication 11.

13. Méthode de réglage en hauteur d'une carrosserie (61) d'un wagon de véhicule ferroviaire (63) selon la revendication 11, **caractérisée en ce que** la position des bras oscillants (22) et/ou de parties (22a ; 22b) de bras oscillants (22) par rapport au cadre de châssis (1) est modifiée par des moyens de réglage, de sorte que la distance verticale entre les essieux et le cadre de châssis (1) est modifiée, en particulier par incréments de 10 mm.

14. Méthode de réglage en hauteur d'une carrosserie (61) d'un wagon de véhicule ferroviaire (63) selon la revendication 11, **caractérisée en ce que** la position de la suspension primaire du châssis (100), en particulier d'au moins quatre barres de torsion (20), est modifiée, selon lequel la distance verticale entre les essieux et le cadre de châssis (1) est modifiée, en particulier par incréments de 10 mm.
